# EUROPEAN PATENT APPLICATION

(11) **EP 1 608 090 A2**
(43) Date of publication of application: **21.12.2005**
(21) Application number: 05253143.1
(22) Date of filing: 20.05.2005
(51) Int. Cl.: H04B 17/00

(54) **System and method for improving wireless measurements on a vehicle**

(30) Priority: 16.06.2004 US 869695
(71) Applicant: Agilent Technologies, Inc., Palo Alto, CA 94306 (US)
(72) Inventor: Burch, Jefferson B., Palo Alto, CA 94306 (US); Engel, Glenn R., Snohomish, WA 98290 (US); Liu, Jerry, Sunnyvale, CA 94086 (US); Purdy, Glen, Snohomish, WA 98290 (US)
(74) Representative: Jehan, Robert

(57) **Abstract**

In one embodiment, a system and method is arranged so that less expensive probes (10) are designed for simple installation. Since both probe cost and installation cost are reduced more probes (10) can be deployed thereby improving wireless measurements across a system. In one embodiment, a self-contained probe (10) is designed using internally generated power and vehicle speed information thereby eliminating the need to connecting into a vehicle's power. The low cost design of each probe (10) allows the electronics to be externally mounted in a quick and easy manner. The resulting large number of deployed probes (10) then allows for different measurements being sent from different probes (10) thereby further reducing the cost per probe (10).

## Description

This invention relates to improving wireless measurements and more particularly to systems and methods for increasing deployment of wireless measurement probes.

In all measurement problems, basic sampling criteria must be satisfied to understand the underlying physical phenomena of interest. It is widely accepted that a sample rate greater than twice that of the highest frequency of interest in the measured signal is required. This is known as the Nyquist criteria.

For measuring signals over wide geographical areas it is important to both sample the signal at many spaced-apart locations and to sample those signals at a sufficiently high rate so as to satisfy the Nyquist sampling rate criteria. For many systems, such as, by way of example, cellular RF signals from a cell site, probes mounted in (or on) vehicles are used. However, when probes are mobile, the spatial and temporal constraints interact with each other. A mobile probe often will have a sampling policy that is triggered by a) if moving fast, after a certain amount of distance has been traversed, trigger the next measurement, or b) if moving slow or not at all, after a certain amount of time has elapsed, trigger the next measurement.

Measurement problems typically involve the following steps: data acquisition, scaling and conversion, analysis, storage and presentation. Many traditional instruments are available that perform one or more (and typically all) of these functions within a single device. An operator interacts with these traditional instruments via a "front panel" or via a PC to configure the measurement conditions and view the measurement results.

Using wireless technology, the measurement probe can be located at a location remote from a user with measurement results steaming across the RF link to the user. This approach can be expanded to large-scale measurement problems with many probes communicating over RF and/or fixed-line links to a central data center.

Such remotely operated systems are highly accurate within the area they cover and are typically less costly than single-operation systems. However, the wireless remote probes are expensive and thus it is not economical to have a large number of such probes deployed. The result, then, is an insufficient number of probes being deployed to meet the sampling criteria discussed above.

Another cost factor is installation costs. Typically, the wireless probe would be permanently mounted in a vehicle (taxi, bus, company truck, etc.). This involves mounting RF, and possibly GPS, antennas on the roof of the vehicle, mounting the probe electronics in a secure location, such as in a trunk, then running coax from the antenna(s) to the probe, tapping into the vehicle's power supply (so that the probe knows if the vehicle ignition is turned on,) and sometimes tapping into the vehicle's transmission pulse circuit to assist with GPS dead-reckoning, etc.

Using existing probe designs, the system designer is stuck in a classic "catch-22." This arises from the dilemma that probes that make powerful measurements are expensive and because they are expensive the designer can't afford too many of them. Since only a limited number of probes are affordable there are fewer of them than required, and thus each probe must be powerful in terms of measurement capabilities. Since each probe must be powerful, they are even more expensive, leading to a further reduction in the number of probes used in a system.

The present invention seeks to provide improved wireless communication test measurements.

According to an aspect of the present invention there is provided a method of performing wireless communication test measurements as specified in claim 1.

According to another aspect of the present invention there is provided a test probe according to claim 1.

Advantageously, the test probe is a low cost test probe.

In one embodiment, a system and method is arranged so that less expensive probes are designed for simple installation. Since both probe cost and installation cost are reduced more probes can be deployed thereby improving wireless measurements across a system. In one embodiment, a self-contained probe is designed using internally generated power and vehicle speed information thereby eliminating the need for connecting into a vehicle's power. The low-cost design of each probe allows the electronics to be externally mounted in a quick and easy manner. The resulting large number of deployed probes then allows for different measurements being sent from different probes thereby further reducing the cost per probe.

Embodiments of the present invention are described below, by way of example only, with reference to the drawings, in which:
FIGURE 1 shows a side view of one embodiment of a self-contained probe;
FIGURE 2 shows a top view of the probe shown in FIGURE 1;
FIGURE 3 shows a top view of another embodiment of a self-contained probe; and
FIGURE 4 shows one embodiment of a measurement system utilizing multiples of the self-contained probes.

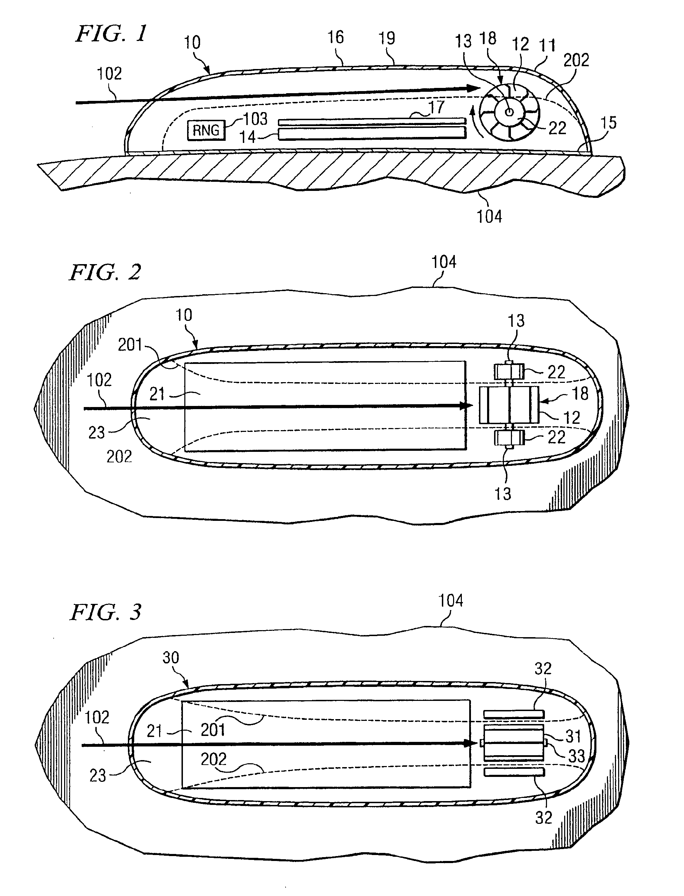

FIGURE 1 shows one embodiment of self-contained probe 10 designed to reduce the installation costs of a wireless measurement probe for mobile applications. The probe, in one embodiment is contained within weather-proof packaging 11 and contains a non-invasive latching mechanism, such as magnetic (or velcro, etc.) base 15, which allows installation to be as simple as placing the probe on metal roof 101 of vehicle 104. Integrated RF (and GPS, if required) antennas 16 are integral in housing 11 thereby eliminating the need to run antenna cables to a separate control device. Power is self-generated by using photovoltaic solar cells 19 and/or wind-powered micro turbine generator 18, either separately or together. In one embodiment, integrated rechargeable batteries 14 connected to solar cells 19 or micro turbine 18 eliminate the need to run power cables to tap into the vehicle's power supply. Power management is integrated into electronics 17 to maximize useful measurements in a power efficient manner. When the battery reaches a sufficient state-of-charge, the sample rate may be increased because power is available. Conversely, when the battery is low, the probe would change its behavior by slowing down measurements (i.e. increasing temporal or spatial thresholds) in order to decrease power requirements.

The micro-wind turbine should be designed to minimize vibration and noise transmitted through the vehicle roof. With the power available from the wind being proportional to the collection area (i.e. the square of the rotor diameter in a conventional wind generator), an efficient design would be to maximize the frontal area of the turbine. As shown, a squirrel cage design is envisioned because it can be safely recessed into a plastic weather-proof housing. Input air slot 23 (FIGURE 2) may be flared to create inlet and outlet ports to maximize air flow 102 across the turbine. Also, the region above the turbine may be enclosed to create a wind tunnel for both safety and efficiency reasons. Alternate turbine designs may follow a typical jet engine or gas turbine where the rotational axis is parallel to the wind flow.

Because wind power increases with the cube of the wind velocity, wind energy is a significant power source on a rapidly moving vehicle (e.g. 80 km/hr or greater). For example, about four times more wind energy is available when traveling at 80 km/hr (50 mph) compared to 50 km/hr (30mph). Of course at high speeds, measurement sampling rates are also high (short duration), so this extra power is put to good use.

To accommodate multiple sensors, measurement electronics 17 should be partitioned between the measurement front/end (i.e. STIM) and measurement backend (i.e. NCAP) as outlined in the IEEE 1451.2 standard. Measurement of the speed of rotation of wind-powered micro turbine generator 18 is used to estimate the vehicle speed (and thus location) during periods of no GPS signal. This internally generated speed generation capability is integrated into the GPS dead-reckoning mechanism and eliminates the need to run a cable to the vehicle's transmission pulse detection circuit.

Probe housing 11, in one embodiment, has air slot 21 (FIGURE 2) arranged such that squirrel cage type fan 18 has its blades exposed to the slot. Wind energy 102 is captured by the squirrel cage and the resulting shaft 13 rotation is transferred to a simple generator. To conserve power, the design of the probe is energy efficient in all aspects. The probe control is designed to suspend operation and enter a low-power sleep state where measurements are not required. When it is time to sample (i.e. location and/or time criteria reached), the probe wakes up and performs the measurement function. For this wake-sleep function to perform correctly, some subsection of the electronics may need to remain powered. A low frequency (e.g. 32 kHz) clock that can record elapsed time can be used for this control. Also, it may be desired for the GPS receiver to remain powered during sleep periods to track elapsed distance (and decrease the startup time to acquire GPS lock). If the probe is measuring the cellular network, some section of the communication electronics may also need to stay powered as well.

FIGURE 2 is a top view of embodiment 10 showing air 102 flowing onto slot 21 formed by sides 201, 202 via flared portion 23. This air causes squirrel cage 12 of turbine 18 to rotate shaft 13 in proportion to the speed of the air, which, in turn, is roughly proportional to the speed of the vehicle. Shaft 13 turns generator(s) 22 to produce power.

FIGURE 3 shows another embodiment having probe.30 in which the turbine axis is in-line with the air flow.

Because of the relatively low cost of each probe and the low (almost non-existent) installation cost, there can be a large number of measurement probes deployed in a system so each probe only needs to satisfy only a small part of the overall measurement task. Accordingly, the overall measurement task is divided into small pieces with lots of probes working to acquire the necessary total task measurements. In addition, the probes are designed to interact with higher-level servers at a control location, not with local users. Therefore, local keyboards and displays are eliminated, further simplifying the design.

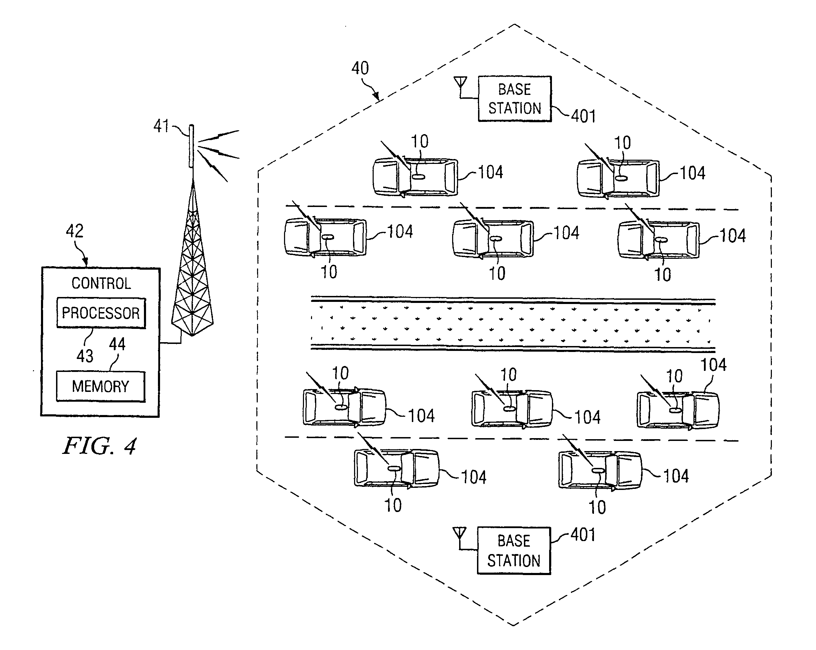

FIGURE 4 shows one embodiment 40 of an RF system being tested by a plurality of mobile probes, such as probes 10 mounted on a plurality of vehicles 104. RF is shown being transmitted to/from tower 41 (or via a base station 401) under control of control system 42 (which could be at a base-station). Processor 43 and memory 44 monitor and control the test measurements. The signals from each probe can be sent on the cellular signals to the tower or they can be communicated via different protocol. The probe signals could, for example, be sent from each vehicle 104 to various control points, such as points 401, and then gathered by control 42, if desired. Points 401 could be fixed, or mobile, or a combination thereof.

To illustrate how a swarm of inexpensive probes can work together, consider the measurement and diagnostics of hand-off problems in today's cellular networks. In cellular and 802.x networks, the network is typically partitioned into cells. As the wireless devices travel through the network they undergo a series of handoff operations between adjacent cells. In practice, numerous handoffs occur in the network during periods of high network usage. Having better measurements on the frequency and scope of handoff problems is an example of a high-value measurement for today's systems.

When attacking this problem with 100s or 1000s of inexpensive probes, each probe would measure and record only a few handoff measurement artifacts. When network bandwidth is available, (or when a mobile probe comes within range of a collection point) that probe transmits its stored measurements to a higher-level server. The higher-level source, such as control 42, can aggregate the data from a large number probes and analyze that data for signal problems.

One problem is how to configure each probe to make the measurement of interest. An approach is to use a statistical system such that each probe only measures a sub-set of the possible test measurements, but taken together over all of probes, all the desired test measurements are obtained. One system for implementing such an approach is to have every probe generate a random number (e.g. between 0 and 1) via, for example, random number generator (RNG) 103 (FIGURE 1), and then have that probe compare that number to some probability threshold for a given measurement type. The probability threshold could be built into each probe or could be downloaded from time to time dependent upon what measurements are desired over the entire measurement area. For example, as the probe transitions between cell sectors (i.e. a handoff event is in progress), the probe tests its random number (say 0.345) against a threshold (say 0.05). If the random number is below that threshold, then the probe proceeds with acquiring and storing the measurement. In this example, the probe would not perform the measurement because it's random number 0.345 is above the threshold. This same "lottery" approach can be followed for each possible measurement. Because of the random statistically based nature of the results, and the large number of probes, a sufficient number of tests of each type will be performed.

Once the probe is simplified, its energy efficiency improves. The goal is to get the probe's energy requirements below the energy available from the integrated photovoltaic and/or micro-turbine wind generator. Rechargeable batteries allow the probe to operate during periods when generated power is not available.

While the embodiments discussed contain self-generated internal power, it is possible to obtain external power simply when such power is available on the roof of a vehicle. This would be true for police cars, taxis, maintenance trucks, etc. The design goal is to eliminate invasive attachment by eliminating the need to obtain power, or other signals, from the interior of the vehicle.

In one embodiment, one or more probes can function as a data recorder and the test results stored, for example, in a flash memory that can be removed for uploading to a database for processing. Alternatively, when the vehicle (or the test probe) is returned to a control location it can be physically linked (by wire or IR, etc.) for the upload of its information. In some situations, the "routine" test results could be communicated in this manner while the critical data could be transmitted to a control location.

The system and method discussed herein can, in addition to use for testing an RF signal, can be employed for any number of testing scenarios. For example, the device can have an opening for receiving air-borne substances, such as pollen, toxic material, radiation, etc., or any other type of input, such as sunlight, noise, vibration, images etc., for testing. As discussed, the results of these tests could be sent back immediately to a control point, or they could be stored in a memory in the device for subsequent uploading.

The disclosures in United States patent application No. 10/869,695, from which this application claims priority, and in the abstract accompanying this application are incorporated herein by reference.

## Claims

1. A method of performing wireless communication test measurements; said method including the steps of:
deploying a large number of test probes (10), each probe being deployed on a mobile vehicle (104) and each probe containing the ability to test a wide variety of wireless communication parameters;
obtaining from time to time any specific one of said test probes at a location external to all of said test probes the results of a specific one of said tested parameters, said specific tested parameter being randomly selected, said obtaining occurring while said mobile vehicle to which said specific test probe is deployed is moving from place to place; and
wherein said deploying is accomplished without invasive attachment of said test probes to said vehicles.

2. A method according to claim 1, including the step of generating within each said test probe power for controlling said test measurements.

3. A method according to claim 2, including the step of generating within said test probes mobile vehicle location signals which are independent from said vehicles' electrical systems.

4. A method according to claim 2 or 3, wherein said deploying step includes attaching each said test probe using a non-invasive latching mechanism (15).

5. A method according to claim 2 or 3, including the step of processing at said external location the test results from a plurality of specific ones of said test probes so as to generate an understanding of said test results from said wide variety or wireless communication parameters.

6. A test probe (10) for performing wireless communication test measurements; said test probe including:
a housing (11);
a non-invasive latching mechanism (15) for temporarily affixing said housing to an outside surface of a mobile vehicle (104);
a self-generating power source (18) within said housing;
an antenna (16) for receiving and transmitting RF signals;
a processor (17) for controlling the performance of test measurements with respect to RF;
a geographical position determination system (14); and
transmit control (17) for enabling said transmitter to send to a location external to said test probe any results from the performance of test measurements performed under control of said processor, said test results having associated therewith a location of said test probe as determined by said geographical position determination system.

7. A test probe according to claim 6, including means (43) for determining which tests are performed by a particular device at a particular time.

8. A test probe according to claim 7, wherein each said test measurement has associated therewith a desired probability of being activated at a particular time; and
wherein said determining means comprises a random number of generator (103) comparison with said probability for each possible test measurement to determine which test measurements will be activated at any particular time.

9. A test probe according to claim 6, 7 or 8, wherein the number of test measurements performed at any given time is controlled, at least in part, by the available power at said given time.

10. A test probe according to claim 6, 7, 8 or 9, wherein the number of test measurements performed at any given time is controlled, at least in part, by the speed of the vehicle to which said device is attached at said given time.
